**Europäisches Patentamt**

**European Patent Office**

**Office européen des brevets**

(11) Publication number: **0 062 088**
**A1**

## EUROPEAN PATENT APPLICATION

(21) Application number: **81102655.8**

(22) Date of filing: **08.04.81**

(51) Int. Cl.³: **C 08 F 257/00**

(43) Date of publication of application: **13.10.82**
**Bulletin 82/41**

(84) Designated Contracting States: **DE FR GB IT**

(71) Applicant: **THE DOW CHEMICAL COMPANY, Dow Center 2030 Abbott Road Post Office Box 1967, Midland Michigan 48640 (US)**

(72) Inventor: **Tiffany, Peter Albert, 3722 Fuller Drive, Midland Michigan (US)**
Inventor: **Hart, Connie Lee, 8 Dennis Court, Midland Michigan (US)**

(74) Representative: **Casalonga, Axel et al, BUREAU D.A. CASALONGA OFFICE JOSSE & PETIT Baaderstrasse 12-14, D-8000 München 5 (DE)**

(54) **A method for preparing an ion-exchange resin in the form of large spheroidal beads from seed beads.**

(57) Ion-exchange resins in the form of large, spheroidal beads having improved integrity and increased resistance to osmotic shock are prepared from a seed bead of a cross-linked addition copolymer having a monomer mixture of a mono- and polyethylenically unsaturated monomer imbibed and subsequently polymerized therein. For example, the spheroidal beads prepared by the imbibition and subsequent copolymerization of styrene and divinylbenzene within a seed bead of a copolymer of the same monometric components can be aminated to form anion-exchange beads having a particle diameter of at least 1.0 mm which exhibit reduced breakage and/or increased osmotic shock resistance.

A METHOD FOR PREPARING AN ION-EXCHANGE RESIN
IN THE FORM OF LARGE SPHEROIDAL BEADS FROM
SEED BEADS.

This invention relates to ion-exchange resins in the form of spheroidal beads, particularly to a method for preparing large, unbroken ion-exchange beads and to the beads thus prepared.

Ion-exchange resins in spheroidal bead form have the ability to exchange ions in a flowing liquid stream without exhibiting substantial structural alteration. For this reason, the beads are widely employed in a variety of continuous ion-exchange operations such as waste treatment, e.g., the removal of undesirable components from water, and the recovery of uranium. In such operations, particularly up-flow or fluidized bed operations, to effectively remove the ionic ingredients from solution, the ion-exchange resin beads advantageously have properties which prevent entrainment losses while providing constant and intimate contact between the beads and the liquid.

Conventionally, ion-exchange resins are prepared in spheroidal bead form by the single step suspension copolymerization of a monovinyl aromatic such as styrene with a polyvinylidene aromatic such as divinylbenzene, followed by the incorporation of active ion-
-exchange groups in the resulting copolymer. For example, anion-exchange resins are conventionally prepared
by halomethylating and subsequently aminating said copolymer. See, for example, Ion-Exchange by F. Helferrich,
published in 1962 by McGraw-Hill Book Company, New York.
Unfortunately, in many operations, particularly anion-
-exchange processes such as uranium recovery and sugar
processing wherein the anion-containing liquid is a thick
slurry, conventionally prepared ion-exchange resin beads
tend to float in the anion-containing liquid, thereby
limiting their effectiveness.

Increasing the particle size of the ion-
-exchange beads has been shown to improve the effectiveness of the beads in continuous operations. Unfortunately, many ion-exchange beads having a large size, e.g.,
greater than about 0.84 mm diameter, are not easily prepared by conventional techniques due to the increased
tendency of the larger beads to crack or break during
preparation, particularly amination, and during use. A
proposed technique for preparing anion-exchange beads
having such a large particle diameter, as disclosed in
U.S. Patent 2,992,544 (McMaster, July 18, 1961), involves
copolymerizing ar-(chloromethyl)styrene and divinylbenzene and subsequently attaching anion-exchange groups to
the resulting copolymer. Unfortunately, ar-(chloromethyl)-
styrene is relatively expensive and available only on a
limited basis. Alternatively, U.S. Patent 3,122,514
(Abrams, February 25, 1964), discloses the preparation
of large ion-exchange beads from the polymerization
product of a polyvinyl compound and a previously polymerized compound. Unfortunately, the prepolymerization

27,931A-F                    -2-

of the monovinyl compound must be closely controlled to prepare a bead having the desired properties.

In view of the above deficiencies of ion--exchange beads having a larger particle size than conventionally prepared ion-exchange beads and the methods for preparing same, it would prove highly desirable to provide a large ion-exchange bead which can be effectively employed in continuous ion-exchange operations.

The above deficiencies have been substantially removed by the present invention, which is a method for preparing an ion-exchange resin in the form of spheroidal beads having a volume average particle diameter of at least 1.0 mm, characterized by:

(a) imbibing a monomer mixture of a monoethylenically unsaturated monomer and a cross-linking agent therefor within spheroidal seed beads of a polymer of a monoethylenically unsaturated monomer and an amount of at least about 0.15 weight percent of a cross-linking agent therefor based on the weight of the monoethylenically unsaturated monomer and cross-linking agent employed in the preparation of the seed bead, said amount being sufficient to make the seed beads insoluble in the monomer mixture, wherein the amounts of the ethylenically unsaturated monomer and cross-linking agent employed in the preparation of the seed beads and imbibed thereby are such that the ion-exchange resin beads prepared therefrom have reduced breakage and/or increased resistance to osmotic shock;

(b)   polymerizing the imbibed monomer to prepare seeded beads; and

(c)   attaching active ion-exchange groups to
the polymers which constitute the seeded beads.

In another aspect, the present invention is
seeded copolymer beads of at least 0.84 mm diameter prepared by imbibing a monomer mixture of mono- and polyethylenically unsaturated monomers within spheroidal seed
beads of a polymer of a monoethylenically unsaturated
monomer and an amount of a polyethylenically unsaturated
monomer sufficient to make the seed beads insoluble in
the monomer mixture, said amount being at least 0.15
weight percent based on the weight of the monoethylenically unsaturated monomer and cross-linking agent employed
in the preparation of the seed bead.

Surprisingly, the incorporation of active ion-
-exchange groups on the large seeded beads causes little
or no breakage, e.g., generally less than 2 to 5 percent,
by number, of the beads are broken.  Moreover, the resulting ion-exchange beads are more resistant to osmotic shock
than conventionally prepared beads of similar size.  In
addition, the large ion-exchange beads possess excellent
mechanical stability, crush strength and ion-exchange
capacities.

The large ion-exchange resins are effectively
employed in a variety of ion-exchange operations including the removal of electrolytes from water and other
liquids such as in desalting, demineralizing and other
purification processes.  These resins of this invention are particularly effective in the removal of uranium from solution and the removal of ash and acidic impurities from sugar solutions.

In this invention, a seed bead is a swellable, spheroidal bead of a polymer derived from a monoethylenically unsaturated monomer and a cross-linking agent therefor. In general, such seed bead is a cross-linked addition copolymer of a monoethylenically unsaturated monomer and a cross-linking agent copolymerizable therewith, preferably a polyethylenically unsaturated monomer. A seeded bead is the spheroidal bead prepared by imbibing a monomer mixture of a monoethylenically unsaturated monomer and a cross-linking agent therefor in the seed bead and subsequently polymerizing the imbibed monomers. The cross-linking agent is advantageously copolymerizable with the monoethylenically unsaturated monomer and is preferably a polyethylenically unsaturated monomer.

Monoethylenically unsaturated monomers employed in the preparation of the seed and seeded bead are advantageously those polymerizable monoethylenically unsaturated monomers employed previously in the preparation of ion-exchange resins in spheroidal bead form. Of such monomers, the monovinyl aromatics such as styrene, halo-substituted styrenes, e.g., bromostyrene and chlorostyrene, and vinylnaphthalene are advantageously employed herein. Although monoalkyl-substituted styrenes such as vinyltoluene or ethyl vinylbenzene can also be employed, especially if the substituent groups are not in a para position with respect to each other, said monoalkyl styrenes are more advantageously employed in combination with styrene. In the practice of this invention, styrene is preferred in the preparation of the seed bead and the seeded bead prepared therefrom.

Cross-linking agents copolymerizable with the monoethylenically unsaturated monomers are advantageously polyethylenically unsaturated monomers; preferably, those polyethylenically unsaturated monomers employed previously in the preparation of ion-exchange resins in spheroidal bead form. Of such monomers, the polyvinyl aromatics such as divinylbenzene, divinyltoluene, divinyl xylene and divinyl naphthalene; ethylene glycol dimethylacrylate; trimethylol propane triacrylate and divinylsuccinate are preferably employed as a cross-linking agent. The polyvinyl aromatics, particularly divinylbenzene, are the preferred cross-linking agents employed in the preparation of the seed and seeded bead.

In the preparation of the seed and seeded beads, the mono- and polyethylenic monomers are advantageously employed in amounts and polymerized at conditions such that the ion-exchange resin in spheroidal bead form (hereinafter referred to as "ion-exchange beads") prepared have a volume average particle size of at least 1.0 mm, when said beads are completely saturated (i.e., swollen) with water, and exhibit improved integrity and/or increased resistance to osmotic shock. For the purposes of this invention, the volume average particle size is measured by conventional wet screen analysis techniques such as the techniques illustrated by ASTM test method D-2187-74 using appropriate size screens (sieves), generally sieves of U.S. Standard Numbers 8, 10, 12, 14, 16, 20 and 30. Advantageously, the ion-exchange beads have a volume average particle size of at least 1.2 mm, preferably at least 1.4 mm, more preferably from 1.2 to 2.0 mm, most preferably from 1.2 to 1.8 mm.

By the term "improved integrity" it is meant that the sphericity exhibited by the ion-exchange beads prepared by the methods of this invention is measurably greater than the sphericity exhibited by ion-exchange beads which are prepared by conventional techniques (i.e., the spheroidal beads employed in the subsequent preparation of the ion-exchange beads are prepared in a single suspension polymerization step as exemplified in Example 1) and which have the same particle size and the same amount of apparent cross-linking (as determined by the volume percent swelling exhibited by the beads as exemplified by Note 3 of Table II). For the purpose of this invention, sphericity is measured by conventional test methods, e.g., the test method described in Note 1 of Table I. Advantageously, the percent breakage, i.e., the percent of beads which are not found to be spherical by the above tests, or a similar test method, exhibited by the beads prepared by the methods of this invention is reduced by at least 20, preferably at least 50, more preferably at least 75 percent, by number, when compared to ion-exchange beads prepared by conventional methods. For the purpose of this invention, ion-exchange beads exhibiting 10 percent, by number, breakage have a 20 percent reduction in breakage when beads of an identical size prepared by the methods of this invention exhibit 8 percent, by number, breakage. Most advantageously, the mono- and polyethylenically unsaturated monomers are employed in amounts such that less than 20, preferably less than 10, more preferably less than 5, most preferably less than 2, percent, by number, of the ion-exchange beads prepared from the seeded copolymer beads are broken.

By the term "resistance to osmotic shock" it is meant the resistance of ion-exchange beads to the breaking and/or cracking caused by the strain created during the volume change experienced by the beads upon their exposure to an aqueous solution of a high electrolyte concentration. Increased resistance to osmotic shock is exhibited when the breaking or cracking exhibited by the ion-exchange beads prepared by the method of the present invention is reduced by a measurable amount using conventional test methods, e.g., Note 2 of Table I, when compared to similar ion-exchange beads prepared using conventional techniques and having the same particle size and amount of apparent cross-linking. Advantageously, the number of ion-exchange beads prepared by the method of this invention which do not crack or break upon exposure to the aqueous solution of the high electrolyte concentration, is at least 20, preferably at least 50, more preferably at least 80, percent (by number) less than the breakage exhibited by similar size ion-exchange beads prepared by conventional techniques. Most preferably, the mono- and polyethylenically unsaturated monomers are employed in amounts such that no more than 20, especially no more than 10, percent (by number) of the ion-exchange beads of this invention are broken or cracked when tested for osmotic shock.

Typically, the amounts of each of the mono- and polyethylenically unsaturated monomers most advantageously employed in the preparation of the seed and

27,931A-F                    -8-

seeded bead depend on a variety of factors including type type of each monomer employed and the desired size of the seed, seeded and resulting ion-exchange bead. In addition, the amount and type of the mono- and polyethylenically unsaturated monomers employed in preparing the seeded bead from the seed bead (i.e., those monomers imbibed by the seed bead) most advantageously employed herein will also vary depending on the size (diameter) and composition, i.e., the amount and type of monomers, of the seed bead. In general, the seed and seeded beads are advantageously prepared using amounts of the mono- and polyethylenic monomers such that when the seeded beads are swollen in a suitable solvent and then aminated by contacting the seeded beads with an aqueous solution of 25 weight percent trimethylamine for 24 hours at 25°C, the resulting aminated beads, when completely saturated with water, have a particle size of at least 1.0 mm. These beads also exhibit improved integrity and/or increased resistance to osmotic shock when compared to a conventionally prepared copolymer bead aminated using the same conditions.

In the preparation of the seed bead, the polyethylenic monomer is employed in an amount of at least 0.15 weight percent based on the weight of the mono- and polyethylenically unsaturated monomers employed in the preparation of the seed bead. This amount is such that the copolymerization product of the monoethylenic and polyethylenic monomers form normally solid beads that do not form a solution with the monomer mixture subsequently imbibed thereby. In general, when the polyethylenic monomer constitutes less than 0.15 weight percent of the mono- and polyethylenic monomers employed in the preparation of the seed beads, the seed beads have an increased tendency to agglomerate during preparation and often do not possess the desired uniformity and sphericity for subsequent preparation of the seeded beads. Moreover, the seeded beads thus prepared are often sufficiently soft that the ion-exchange resins prepared therefrom are not usable in various ion-exchange operations. The maximum amount of the polyethylenic monomer employed in preparing the seed bead is such that the seed bead can imbibe at least 20, advantageously at least 40, more advantageously at least 50, most advantageously at least 70, weight percent of the monomer mixture, said weight percent being based on the total weight of the seed bead. In general, the maximum amount of the polyethylenic monomer depends on the amount of breakage exhibited in the ion-exchange beads thus prepared. When the polyethylenically unsaturated monomer constitutes more than about 1 weight percent, of the total mono- and polyethylenically unsaturated monomers employed, the ion-exchange beads prepared therefrom show excessive breakage. Moreover, at such large amounts of the polyethylenic monomer, the seed bead cannot absorb the desired amounts of the monomers. Therefore, the polyethylenically unsaturated monomer preferably constitutes from 0.15 to 1.0, more preferably from 0.15 to 0.5, most preferably from 0.2 to 0.4, weight percent, and the monoethylenically unsaturated monomer preferably constitutes from 99.85 to 99, more preferably 99.85 to about 99.5, most preferably from 99.8 to 99.6, weight percent of the seed bead, based on the total weight of the mono- and polyethylenically unsaturated monomers employed.

On the other hand, in the preparation of the seeded bead, the polyethylenically unsaturated monomer advantageously constitutes up to 10 weight percent of the total weight of the monomers imbibed by the seed bead. Preferably, the polyethylenic monomer constitutes from 0.2 to 8, more preferably from 2 to 6, weight percent and the monoethylenic monomer constitutes from 99.8 to 92, more preferably from 98 to 94, weight percent of the weight of the mono- and polyethylenic monomers imbibed by the seed bead.

In general, in the preparation of the seed bead and the seeded bead prepared from it, the mono- and polyethylenic monomers are advantageously employed in amounts and polymerized such that the seed bead constitutes from 1 to 50 weight percent of the seeded bead and the monomers imbibed and subsequently polymerized therein constitute from 99 to 50 weight percent of the seeded bead, based on the total dry weight of the seeded bead. Preferably, the seed bead constitutes from 5 to 45, more preferably from 10 to 30, most preferably from 15 to 25, weight percent of the total dry weight of the seeded bead, with the remainder of the seeded bead being composed of the monomers imbibed and subsequently polymerized in the seed bead.

In the preparation of large ion-exchange beads by the method of this invention, the seed bead is advantageously prepared by the suspension (pearl) polymerization of the mono- and polyethylenically unsaturated monomers in a suitable polymerization medium which is generally an aqueous solution containing a suspension stabilizer, and in the presence of a free radical generator, e.g., benzoyl peroxide, and agitation. In general, suspension polymerization techniques well-known in the art for preparing such a cross-linked addition copolymer as spheroidal beads, of the gel or macroporous type, are useful in the preparation of the seed bead. Illustrative of such methods, including the kinds of initiators and polymerization media, are those disclosed by U.S. Patent 2,960,480 (Thielen, November 15, 1960), for the preparation of gel-type beads and U.S. Patent 3,637,535 (Corte, January 25, 1972), for the preparation of the more porous beads, i.e., the so-called macroporous beads. In this invention, the seed beads are preferably of the gel type.

By controlling the reaction conditions of the suspension polymerization, e.g., viscosity of the reaction media and the nature of the suspension stabilizers, the particle diameter of the resulting seed bead can be varied. Advantageously, in the practice of this invention, the seed beads are prepared such that the weight average particle diameter of the dry beads (as measured by conventional dry screen analysis) is at least 0.1 mm. Preferably, the seed bead is prepared at a number average particle diameter of at least 0.4 mm, more preferably at least 0.5 mm, most preferably at least 0.6 mm. Although the maximum particle diameter of the seed bead is limited only by reaction conditions, e.g., suitable agitation rates to prevent agglomeration of the individual particles, the seed bead is generally advantageously prepared with a number average particle size of less tha 2.4 mm, preferably less than 1 mm. Advantageously, said seed beads have a relatively uniform size, with at least 80 percent of the beads, by weight, being greater than 0.5 times and no more than 1.5 times the weight average particle size.

Following suspension polymerization, the resulting spheroidal seed beads are advantageously recovered from the reaction media by conventional techniques, e.g., filtration. Advantageously, the recovered beads are subsequently dewatered and dried.

The seeded beads are advantageously prepared from the resulting seed beads by imbibing within the seed bead a monomer mixture of the previously described mono- and polyethylenically unsaturated monomers, which mixture also advantageously contains a polymerization initiator, and subsequently polymerizing the imbibed monomers. The term "imbibing within" means that upon contacting the seed bead with the monomer mixture, the seed bead swells, which swelling is believed to be due to the absorption of the monomer mixture by the seed bead. Although the monomer mixture advantageously contains the same monomers that were employed in the preparation of the seed bead, such is not critical to the practice of this invention.

The total amount of the mono- and polyethylenically unsaturated monomers employed in the monomer mixture and the conditions of imbibition and subsequent polymerization are controlled such that the weight average particle diameter of the resulting seeded bead, when dried, is at least 0.84 mm, preferably at least 1 mm, more preferably at least 1.2 mm. Again, although the largest particle size is primarily limited by reaction conditions, the seeded bead is generally prepared with a number average particle size of less than 2.8 mm, preferably less than 2.0 mm. It is also desirable that the seeded beads have a relatively uniform size, with at least 80 percent of the total number of beads being greater than 0.5 times the number average particle size and no greater than 1.5 times the weight average particle size.

Polymerization initiators useful herein include those initiators useful in the preparation of the seed bead. Preferably, the initiator is a conventional chemical initiator useful as a free radical generator in the polymerization of ethylenically unsaturated monomers. Representative initiators are UV light and chemical initiators including azo compounds such as azobisisobutyronitrile; peroxygen compounds such as benzoyl peroxide, t-butyl peroctoate, t-butyl perbenzoate and isopropylpercarbonate. The initiator is employed in an amount sufficient to cause the copolymerization of the monomeric components in the monomer mixture. Such amount will vary depending on at least the type of initiator employed, the composition of the seed bead and the type and proportion of monomers in the monomer mixture imbibed. The initiator is employed in amounts from 0.02 to 1, preferably from 0.05 to 0.5, weight percent based on the total weight of the monomer mixture.

In one embodiment of this invention, the imbibition of the monomer mixture is conducted by contacting the monomer mixture, which mixture advantageously contains the polymerization initiator, with the seed bead using sufficient agitation to maintain continuous and intimate contact between the seed bead and monomer mixture. The imbibition of the monomer may be conducted neat, but preferably sufficient water is employed during the imbibition to prevent agglomeration of the seed beads. Typically, such amount of water is advantageously from 1 to 20, preferably from 2 to 15, weight percent of the total weight of the water, seed beads and monomer mixture. Typically, a period from 10 to 100, preferably 20 to 80, minutes is employed for imbibition of the monomer in the seed beads. Generally, imbibition is conducted at room temperatures, e.g., from 18°C to 25°C, although any temperature which does not cause significant polymerization of the monomers can be employed.

Imbibition of the components comprising the monomer mixture will swell the seed bead and the monomeric components of said mixture are polymerized while the bead is in such a swollen state. Normally, the polymerization is conducted using conventional suspension polymerization techniques.

In such polymerization, the swollen seed beads are advantageously suspended, using relatively high agitation rates, in a suitable suspending medium such as water or other aqueous liquid which preferably contains a suspending agent. Suspending agents useful herein are those materials which assist in maintaining a more uniform dispersion of the swollen seed beads in the aqueous liquid. Although the suspending agents advantageously employed herein depend on the type and amount of monomers employed in preparing the swollen seed bead, in general, suspending agents conventionally employed hereto in the suspension polymerization of mono- and polyethylenically unsaturated monomers are preferably employed. Examples are gelatin, polyvinyl alcohol, sodium oleate, sodium methacrylate, magnesium silicate, sodium cellulose glycolate, hydrocyethylcellulose and methylcelluloses. The amount of the suspending agent employed

27,931A-F                    -15-

depends on a variety of factors and is preferably that amount which prevents agglomeration of the swollen seed beads. Typically, from 0.05 to 1.0 weight percent, based on the weight of the seed bead, of the suspending agent is employed.

While the amount of the suspending medium employed will vary depending on the type and amount of the suspending agent and swollen bead, in general, the suspending medium is employed in amounts from 30 to 70, preferably from 40 to 60, weight percent based on the weight of the swollen seed beads, i.e., the weight of the seed bead and monomer mixture.

Although the temperature used to polymerize the imbibed monomers depends primarily on the choice of the polymerization initiator, polymerization is generally conducted at temperatures between 50°C and 100°C, preferably between 60°C and 90°C.

Following polymerization, the resulting seeded beads are recovered from the reaction media using conventional techniques, e.g., filtration, and the recovered beads dewatered and, optionally, dried.

In another embodiment, the imbibition and subsequent polymerization of the monomer mixture is conducted at conditions such that the resulting seeded bead has a substantial number of macropores incorporated therein. Preferably, in such embodiment, the seed bead, in addition to imbibing the monomer mixture of the mono- and polyethylenic unsaturated monomers and, optionally, a polymerization initiator, further imbibes a pore-forming material. Suitable pore-forming materials are those which impart to the resulting seeded bead a macroporous type structure, i.e., the seeded bead contains pores having a diameter of at least 15 Å, preferably at least about 20 Å, and a surface area of at least 1 $m^2/g$, preferably at least 5 $m^2/g$. In general, organic compounds, particularly organic liquids, which form a solution (or are miscible) with the monomers imbibed by the seed bead and which do not dissolve the seed or seeded bead, are usefully employed. Pore-forming materials (porogenic materials) employed heretofore in the preparation of macroporous resins such as disclosed by U.S. Patent 4,104,209 (Mikes, August 1, 1978), are employed in the practice of this invention. In general, the preferred organic liquids are also inert, i.e., they do not react with the monomers, polymers or the polymerization medium, exhibit a vapor pressure of at least 10 mm at 23°C and 760 mm of Hg and do not boil below about 60°C. Moreover, while the organic liquids can be swelling agents for the seeded bead, e.g., an aromatic hydrocarbon such as toluene, liquids which do not appreciably swell the bead are generally preferred. Examples of such organic liquids are the aliphatic hydrocarbons such as hexane and isooctane, halogenated hydrocarbons such as ethylene chlorine and chlorobenzene, aliphatic and cycloaliphatic alcohols such as cyclohexanol and methanol, and ethers such as diethyl ether, with the aliphatic hydrocarbons being preferred.

In preparing the aforementioned macroporous seeded beads, the pore-forming organic material is employed in amounts sufficient to impart the desired properties to the resulting macroporous seeded bead. While such amounts will vary depending on the type of the organic material employed, and the type and amount of monomers employed in the monomer mixture and in the preparation of the seed bead, in general, the inert organic liquids are generally employed at from 15 to 80 weight percent and preferably, from 20 to 70, more preferably from 25 to 65, weight percent based on the total weight of the monomers imbibed by the seed bead.

Following polymerization of the imbibed monomer, the resulting seeded bead is advantageously washed with a solvent to remove the pore-forming material employed in preparing the macropores. Preferably, the pore-forming material is essentially completely removed prior to further treatment of the seeded bead.

The seeded beads are converted to large ion-exchange beads using techniques well-known in the art for converting cross-linked addition copolymers of a mono- and polyethylenically unsaturated monomer to such resins. In the preparation of weak base and chelate type reins, the seeded beads are haloalkylated, preferably halomethylated, most preferably chloromethylated, and the ion-active exchange groups subsequently attached to the haloalkylated copolymer. Methods for haloalkylating the cross-linked addition copolymers and the haloalkylating agents employed in such methods are U.S. Patent 3,311,602 (Raley, March 28, 1967), and Ion-Exchange, by F. Helferrich, identified previously. Typically, the haloalkylation reaction consists of swelling the cross-linked addition copolymer with a haloalkylating agent, preferably bromomethyl methyl ether, chloromethyl methyl ether or a mixture of formaldehyde and hydrochloric acid, most preferably chloromethyl methyl ether, and then reacting the copolymer and haloalkylating agent in the presence of a Friedel-Crafts catalyst such as $ZnCl_2$, $FeCl_3$ or $AlCl_3$.

27,931A-F                     -18-

Generally, anion-exchange beads are prepared from the haloalkylated seeded bead by contacting the bead with a compound reactive with the halogen of the haloalkyl group and which, upon reaction, forms an active anion-exchange group. Such compounds (i.e., aminating agents) and methods for preparing anion-exchange resins therefrom, i.e., weak base resins and strong base resins, are described in U.S. Patent 2,992,544 (previously described) and Ion-Exchange by F. Helferrich, identified previously. Typically, a weak base resin is prepared by contacting the haloalkylated copolymer with ammonia, a primary amine or a secondary amine. Representative primary and secondary amines include methylamine, ethylamine, butylamine, cyclohexylamine, dimethylamine and diethylamine. Strong base ion-exchange resins are prepared using tertiary amines such as trimethylamine, triethylamine, tributylamine, dimethylisopropanolamine or ethylmethylpropylamine as the aminating agent.

Amination generally comprises heating, with reflux, a mixture of the polymer beads and at least a stoichiometric amount of the aminating agent to a temperature sufficient to react the aminating agent with the halogen atom attached to the carbon atom alpha to the aromatic nucleus of the polymer. A swelling agent such as water, ethanol, methanol, methylene chloride, ethylene dichloride, dimethoxymethane or combinations thereof, is optionally, but advantageously, employed. Conventionally, amination is carried out at conditions such that the anion-exchange groups are uniformly dispersed throughout the entire bead. Such complete amination is generally obtained within from 2 to 12 hours at reaction temperatures between 25°C and 150°C.

Generally, chelate resin beads are prepared from the halogenated polymer by attaching thereto chelate active groups, e.g., carboxyl groups. Chelate resins are prepared by known methods wherein the halogenated polymer is aminated by a technique previously described and the aminated copolymer subsequently reacted with a suitable carboxyl-containing compound, e.g., chloroacetic acid. Alternatively, the haloalkylated polymer can be directly reacted with a suitable amino acid such as diiminoacetic acid or glycine or an aminopyridine such as 2-picolylamine and N-methyl-2-picolylamine to form a chelate resin.

Large cation-exchange resin beads are prepared from the seeded beads using techniques well-known in the art for converting the cross-linked addition copolymer of mono- and polyethylenically unsaturated monomers to a cation-exchange resin. Such methods for preparing cation-exchange resins are described in Ion-Exchange by F. Helferrich, previously described. In general, the cation-exchange resins useful herein are strong acid resins which are prepared by sulfonating the seeded bead. While the sulfonation may be conducted neat, generally, the bead is swollen using a suitable swelling agent such as a sulfonation-resistant chlorinated hydrocarbon (e.g., chlorobenzene or tetrachloroethylene) or an aliphatic or aromatic hydrocarbon (e.g., toluene or xylene) and the swollen bead reacted with a sulfonating agent such as sulfuric or chlorosulfonic acid or sulfur trioxide. Preferably, an excess amount of the sulfonating agent, e.g., from 2 to 7 times the weight of the seeded bead, is employed and the sulfonation is conducted at a temperature from 50°C to 200°C.

While the amination of the haloalkylated seeded bead to form a heterogeneous anion-exchange bead can be conducted neat, generally, the haloalkylated seeded bead is swollen in a suitable swelling agent and the swollen bead subsequently aminated.

Generally, to help control the rate of amination, such amination is advantageously conducted at relatively low temperatures, with temperatures from -10°C to 35°C, more preferably from 0°C to 25°C, being preferred.

Swelling agents advantageously employed herein are liquids which are capable of swelling a haloalkylated seeded bead without dissolving said bead. Advantageously, the swelling agent is an organic liquid, a mixture of miscible organic liquids or a mixture of water with one or more organic liquids miscible with water, which swelling agent has a solubility parameter from 8.5 to 10, preferably from 9 to 10, more preferably from 9.2 to 9.8 $(cal/cc)^{\frac{1}{2}}$. Representative swelling agents advantageously employed herein include dimethoxymethane, benzene, perchloroethylene, ethylenedichloride, chlorobenzene, trichloroethane and methyl isobutyl ketone, and mixtures of dimethoxymethane or methanol with water. Preferred solvents are dimethoxymethane, methyl isobutyl ketone and a mixture of dimethoxymethane with water; with a mixture of dimethoxymethane with water being the most preferred.

It is generally desirable to periodically obtain samples of the beads at various times during amination for analysis by conventional techniques to determine the degree of amination. Based on such results, the amination reaction is easily terminated when the desired amount of amination is obtained.  In general, at the
milder conditions previously described, such time period
will range between 1 and 60 minutes.

The following examples illustrate the invention.  All percentages and parts are by weight unless
otherwise indicated.


Example 1
Into a suitable size flask equipped with an
agitator, thermometer and heating and cooling means and
containing a mixture of 1000 g water, 1.0 g methyl cellulose and 1.0 g of sodium dichromate is added, with agitation, a mixture of 998 g styrene, 2.0 g divinylbenzene
and 1.0 g benzoyl peroxide.  The rate of addition and agitation are controlled such that the desired droplet size
is obtained upon addition.  The resulting suspension is
heated to 75°C for 8 hours, and 115°C for 4 hours to
copolymerize the styrene and divinylbenzene.  The resulting seed beads of the cross-linked addition copolymer are
recovered by filtration, dried and screened using conventional techniques.  The dried seed beads are found to
have a weight average particle size of 0.6 mm.

Into a suitable size flask equipped with an
agitator, thermometer and heating and cooling means is
placed 200 g of the dried seed beads.  To the flask is
then added a monomer mixture of 780 g styrene, 20 g
divinylbenzene and 1.0 g benzoyl peroxide.  The resulting mixture is agitated to maintain constant and intimate
contact between the seed bead and the monomer mixture for 1 hour, allowing the seed bead to imbibe the monomer mixture, which imbibition causes swelling of the seed bead. To the flask is then added 100 g of an aqueous solution containing one weight percent of a methyl cellulose. This solution and the swollen seed beads are intimately mixed using high rates of agitation for a period of about ½ hour. Following this period, while continuing the agitation, 900 g of water containing 0.1 weight percent sodium dichromate is added to the flask. Agitation is maintained for an additional ½ hour.

The flask is then heated to 75°C for 8 hours and 115°C for 4 hours to copolymerize the imbibed monomers. The resulting seeded beads are recovered by filtration. The seeded beads are dried and screened. The dried seeded beads are found to have a weight average particle size of 1.2 mm.

A 244-g portion of the seeded beads is added to a suitable flask containing 1000 cc of chloromethyl methyl ether. This mixture is allowed to stand for 2 hours at 10°C with agitation. At the end of this period, 83 g of ferric chloride is added to the flask and the temperature of the flask is adjusted to 52°C. This temperature is maintained for 3 hours, at the end of which time the flask is cooled. The chloromethylated seeded beads are washed with 2500 cc of methanol.

A 153-g portion of the washed, chloromethylated seeded beads is transferred to a suitable flask containing 135 cc of dimethoxymethane. Without agitation, the chloromethylated seeded beads are allowed to swell in the dimethoxymethane for 1 hour. At the end of this period, a 115-ml portion of a 25 weight percent aqueous solution of trimethylamine is added to the flask. The flask is maintained at ambient temperatures, i.e., 18°C to 25°C for 4 hours. Following this period, the dimethoxymethane is distilled off with deionized water being added at the same rate as the distillation of the dimethoxymethane. After complete distillation, sufficient amounts of an aqueous solution of 5 weight percent hydrochloric acid is added to the flask to acidify the resulting aminated seeded beads (anion-exchange beads). These anion-exchange beads are then cooled and washed with water. The washed beads are then recovered by conventional filtration techniques and the recovered beads denoted Sample No. 1.

A portion of the water swolled ion-exchange seeded beads are found to have a volume average particle size of 1.7 mm.

As a control, a mixture of 980 g of styrene, 20 g of divinylbenzene and 1.0 g of benzoyl peroxide is added to a suitable flask containing 1000 g of water, 1.0 g of methyl cellulose and 1.0 g of sodium dichromate. The rate of addition and the agitation rate are controlled such that the desired droplet size is obtained upon addition. The resulting suspension is heated at 75°C for 8 hours, followed by 115°C for 4 hours, to copolymerize the styrene and divinylbenzene. The resulting beads are recovered from the reaction media by filtration. The beads are dried, screened using conventional techniques and found to have a weight average particle size of 1.3 mm.

The resulting beads are chloromethylated and aminated in a manner similar to that hereinbefore described in the example. The resulting water swollen aminated beads are denoted Sample No. C and are found to have a volume average particle size of 1.7 mm.

Each sample is tested for sphericity, crush strength, wet volume and dry weight capacity and percent water retained. The results of this testing are recorded in Table I.

TABLE I

|  | Sample No. C* | Sample No. 1 |
|---|---|---|
| Sphericity, %[1] | <50 | >98 |
| Osmotic Shock Resistance, %[2] | <50 | 85 |
| Water Retention %[3] | 55 | 59 |
| Wet Volume Capacity, Meq/ml[4] | 1.2 | 1.4 |
| Dry Weight Capacity, Meq/g[5] | 3.8 | 4.4 |

*Not an example of the present invention.

[1]Sphericity, i.e., those beads which are unbroken, is a measurement of the percent, by number, of the anion-exchange beads which, when viewed under a microscope at seven power magnification, do not exhibit breaking or cracking. In this example, approximately 100 anion-exchange beads are examined from each sample in this manner and the percent of beads which exhibit sphericity calculated using the formula

$$\frac{N_s}{N_t} \times 100$$

wherein $N_s$ is the number of beads which exhibit no cracking or breaking and $N_t$ is the total number of beads tested.

27,931A-F                    -25-

0062088

TABLE I Cont'd.

[2]Osmotic shock is a determination of the percent (by number) of ion-exchange beads which break upon the exposure thereof to a high electrolytic concentration. In said determination, a dish containing an aqueous solution of 20 percent sodium hydroxide by weight is placed on the stage of the microscope. The microscope is at ten power magnification and focused so that the beads placed in the solution are clearly in view. A bead, which has been wiped to remove excess water therefrom, is dropped in the aqueous sodium hydroxide solution. The bead is examined under the microscope for any cracking or breaking. Approximately 50 beads are tested in this manner and the percent of beads which are resistant to osmotic shock calculated using the formula

$$\frac{Nu}{Nt} \times 100$$

wherein Nu is the number of beads which exhibit no breaking or cracking and Nt is the total number of beads tested.

[3]Water retention is the weight percent of water retained by the beads based on the weight of the beads and the water.

[4]Determination of the available anion-exchange sites per unit volume which is measured by chloride titration with silver nitrate as described in DOWEX: Ion-Exchange, published in 1964 by The Dow Chemical Company, pages 37 and 38.

[5]Determination of the available anion-exchange sites per unit weight (dry) which is measured by chloride titration with silver nitrate as described in DOWEX: Ion-Exchange, described above, pages 37 and 38.

As evidenced by the data in the foregoing table, the large anion-exchange beads of the present invention wherein a monomer mixture of a mono- and polyethylenic monomer is imbibed by a seed bead and thereafter polymerized exhibit reduced breakage, i.e., improved integrity,

27,931A-F

and improved crush strength when compared to a large anion-exchange bead prepared by conventional techniques. Moreover, as evidenced by the excellent dry weight and wet volume capacities, the anion-exchange capacity of the large beads of this invention are excellent.

Example 2

Following the procedure of Example 1, several samples (Sample Nos. 2-7) of large anion-exchange resin beads are prepared using the various amounts of the mono- and polyethylenically unsaturated monomers in the preparation of the seed bead and monomer mixture imbibed thereby as specified in Table II. In addition, several control samples of large beads (Sample Nos. C-2 and C-3) are prepared using conventional techniques with the various amounts of the polyethylenically unsaturated monomer, i.e., divinylbenzene, as recorded in Table II. Each sample of the thus prepared large anion-exchange beads are tested for dry weight capacity, wet volume capacity and percent water retention. In addition, anion-exchange beads having a particle size of 1.68 mm-2.0 mm are separated from each sample and tested for sphericity, crush strength and osmotic shock. The results of this testing are reported in Table II.

TABLE II

| Sample No. | DVB, %[1] Seed | DVB, %[1] Seeded | Seed Bead %[2] | X-Link %[3] | Dry Wt. Capacity Meq/g[4] | Wet Wt. Capacity Meq/ml[5] | $H_2O$ In Beads %[6] | Spheri-city, %[7] | Crush Strength, Kg[8] | Osmotic Shock Resistance, %[9] |
|---|---|---|---|---|---|---|---|---|---|---|
| C-2* | - | - | - | 1.4 | 4.3 | 1.2 | 61.1 | 90 | 1.2 | 67 |
| 2 | 0.3 | 1.0 | 25 | 1.4 | 4.39 | 1.12 | 63.5 | 99 | 1.6 | 90 |
| C-3* | - | - | - | 3.3 | 4.2 | 1.6 | 43.5 | 67 | 0.9 | 80 |
| 3 | 0.2 | 4.0 | 20 | 3.3 | 4.22 | 1.4 | 49.1 | 98 | 1.8 | 87 |
| 4 | 0.5 | 1.0 | 25 | 1.6 | 3.78 | 0.75 | 59.0 | 99 | 0.8 | 13 |
| 5 | 0.2 | 2.0 | 20 | 2.0 | 4.28 | 1.12 | 57.7 | 99 | 2.2 | 57 |
| 6 | 0.2 | 0.2 | 20 | 0.2 | 4.6 | .73 | 78.8 | 98 | 0.33 | 95 |
| 4* | 1.8 | 0.1 | 40 | 2.5 | 4.3 | 1.3 | 49.7 | CRK | - | - |
| 5* | 1.8 | 0.2 | 25 | 4.6 | 4.4 | 1.3 | 49.6 | CRK | - | - |
| 7 | 1.8 | 0.5 | 40 | 3.1 | 3.82 | 1.3 | 47.5 | 98 | 2.5 | 100 |
| 6* | 1.8 | 1.8 | - | 6.0 | 4.3 | 1.6 | 44.0 | CRK | - | - |

Table II Cont'd.

C-*Not an example of the present invention.

[1]Weight percent of the polyethylenically unsaturated monomer, which in this example is divinylbenzene, employed in the preparation of the seed bead and the seeded bead prepared therefrom. The monoethylenically unsaturated monomer, which in this case is styrene, constitutes the remainder of the monomer employed in the preparation of seed and seeded beads.

[2]The weight percent of the seed bead in the resulting seeded bead. The remainder of the seeded bead is composed of the monomers imbibed by the seed bead.

[3]Percent cross-linkage of the final seeded bead is determined from the percent volume increase exhibited by the bead when swollen by toluene. From a graph such as depicted on page 879 in the Kirk-Othmer Encyclopedia of Chemical Technology, 2nd Edition, published in 1966 by John Wiley & Sons, Inc., Vol. 11, R. M. Wheaton and A. H. Seamster "Ion-Exchange", the percent cross-linkage can be determined.

[4]Same as [5] in Table I.

[5]Same as [4] in Table I.

[6]Same as [3] in Table I.

[7]Same as [1] in Table I, wherein CRK indicates excessive cracking and breaking of the beads.

[8]Crush strength is the number average crush strength of at least about 60 individual beads having anumber average particle size of 1.7 mm as determined by a tester. Crush strength is not conducted on beads which show excessive cracking due to the limited value of the test results.

[9]Same as [2] in Table I. Osmotic shock is not conducted on beads which show excessive cracking due to the limited value of the test results.

As evidenced by the data in Table II, large anion-exchange beads prepared by the methods of this invention have little or no breakage, whereas the control beads show greater amounts of breakage. The amount of cross-linking agent employed in preparing the seed bead is shown to be critical in the practice of this invention as evidenced by the excessive cracking exhibited by three of the four samples (Control Nos. 4-6) using 1.8 percent divinylbenzene in the preparation of the seed bead. The greater sphericity and osmotic shock resistance of the other sample (Sample No. 7) prepared using 1.8 percent divinylbenzene in the seed bead is believed to be due to the fact that although the beads are aminated throughout, i.e., there is no core having essentially no active ion-exchange groups, the amination of the beads is not complete, i.e., a relatively low concentration of ion-exchange groups, as evidenced by the relatively low dry weight capacity of the beads. Upon more complete amination, it is believed the beads of Sample No. 7 would also show excessive breakage. Moreover, reference to the osmotic shock resistance of Sample No. 4 evidences that less than 0.5 weight percent cross-linking agent in the seed bead is preferred.

The other properties of the large anion-exchange beads are found to be influenced by the composition of the bead, e.g., the amounts of mono- and polyethyenically unsaturated monomers in the seed and seeded bead, and the percent of the seed bead in the resulting seeded bead.

0062088

1. A method for preparing an ion-exchange resin in the form of spheroidal beads having a volume average particle diameter of at least 1.0 mm, characterized by:

(a) imbibing a monomer mixture of a monoethylenically unsaturated monomer and a cross-linking agent therefor within spheroidal seed beads of a polymer of a monoethylenically unsaturated monomer and an amount of at least about 0.15 weight percent of a cross-linking agent therefor based on the weight of the monoethylenically unsaturated monomer and cross-linking agent employed in the preparation of the seed bead, said amount being sufficient to make the seed beads insoluble in the monomer mixture, wherein the amounts of the ethylenically unsaturated monomer and cross-linking agent employed in the preparation of the seed beads and imbibed thereby are such that the ion-exchange resin beads prepared therefrom have reduced breakage and/or increased resistance to osmotic shock;

(b) polymerizing the imbibed monomer to prepare seeded beads; and

(c) attaching active ion-exchange groups to the polymers which constitute the seeded beads.

27,931A-F

2. The method of Claim 1 and further characterized in that the cross-linking agent for the monoethylenically unsaturated monomer employed in the preparation of the seed and the seeded beads is a polyethylenically unsaturated monomer.

3. The method of Claim 2 and further characterized in that the monoethylenically unsaturated monomer employed in the preparation of the seed and the seeded beads is a monovinylidene aromatic compound, and the polyethylenically unsaturated monomer employed in the preparation of the seed and the seeded beads is a polyvinyl aromatic.

4. The method of Claim 1 and further characterized in that the ion-exchange beads have a volume average particle size of at least 1.2 mm.

5. The method of Claim 1 and further characterized in that the ion-exchange beads have a volume average particle size of at least 1.2 mm and the polyethylenically unsaturated monomer constitutes less than 1.0 weight percent of the weight of the mono- and polyethylenically unsaturated monomers employed in the preparation of the seed bead and constitutes up to 10 weight percent of the weight of the mono- and polyethylenically unsaturated monomers in the monomer mixture imbibed thereby.

6. The method of Claim 1 and further characterized in that the seed bead constitutes from 1 to 50 weight percent and the monomers imbibed and subsequently polymerized within the seed bead constitute from 99 to
50 weight percent of the total dry weight of the seeded
bead.

7. The method of Claim 2 and further characterized in that the polyethylenic monomer constitutes
from 0.2 to 8 weight percent of the mono- and polyethylenic monomers imbibed by the seed bead.

8. The method of Claim 2 and further characterized in that the polyethylenically unsaturated monomer constitutes from 0.15 to 0.5 weight percent and the
monoethylenically unsaturated monomer constitutes from
99.85 to 99.5 weight percent of the total weight of the
mono- and polyethylenically unsaturated monomers employed
in the preparation of the seed bead and the polyethylenically unsaturated monomer constitutes from 2 to 6 weight
percent and the monoethylenically unsaturated monomer constitutes from 98 to 94 weight percent of the total weight
of the mono- and polyethylenically unsaturated monomers
imbibed by the seed bead and the seed bead constitutes
from 5 to 45 weight percent of the total dry weight of
the seeded bead.

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | US - A - 2 960 480 (THIELEN)<br>* Claim 1; column 1, lines 40-64; column 2, lines 18-20 * | 1-8 | **C 08 F 257/00** |
| X | CHEMICAL ABSTRACTS, vol.87, no.10, September 5th, 1977, page 32, abstract 69101x<br>COLUMBUS OHIO (US)<br>& JP - A - 77 47 089 (MITSUBISHI CHEMICAL INDUSTRIES CO. LTD.) 14-04-1977<br>* Abstract * | 1 | **TECHNICAL FIELDS SEARCHED (Int.Cl. ³)**<br><br>C 08 F |
| A | FR - A - 1 537 741 (VEB) | | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 27-04-1982 | MEULEMANS |

EPO Form 1503.1 06.78